# EUROPEAN PATENT APPLICATION

(11) **EP 3 855 166 A1**
(43) Date of publication of application: **28.07.2021**
(21) Application number: 21020026.7
(22) Date of filing: 22.01.2021
(51) Int. Cl.: G01N 21/65

(54) **SERS-BASED MEASUREMENT DEVICE AND CORRESPONDING MEASURING METHOD FOR DETECTING PESTICIDES IN AGRICULTURAL PRODUCTS**

(30) Priority: 22.01.2020 PL 43267020
(71) Applicant: Rambox Sp. z o.o., 50-020 Wroclaw (PL)
(72) Inventor: Wróbel, Maciej, 82-200 Malbork (PL); Karpienko, Katarzyna, 80-345 Gdansk (PL); Markiewicz, Natalia, 55-200 Olawa (PL); Andrzejewski, Damian, 50-515 Wroclaw (PL)
(74) Representative: Matyka, Malgorzata

(57) **Abstract**

A mobile device and its use for detecting pesticides in a sample which is an agricultural product by a method of surface-enhanced Raman spectroscopy (SERS) are disclosed. The device includes a feeder for raw material (4), a container for processing the raw material into the required form (5), a feeder for nanomaterials in the liquid phase ( 6), a feeder for nanomaterials in solid phase - substrates (7) with nanomaterials, a container for preparing a sample for measurement (8), a platform for moving samples in containers or vessels for measurement (9), Raman spectrometer (10) and a measuring chamber (11) .

## Description

The subject of the invention is a measuring device and pesticides measurement method for agricultural products. This device can be used in agriculture, trade in agricultural products, fruit and vegetable processing, audit bodies or analytical laboratories. In particular, the device can be used in trade, at the intersection of a producer of agricultural products and a wholesaler, or a wholesaler and recipient of agricultural products, or an importer. The device measures the type and concentration of a pesticide in an agricultural product, e.g. vegetable or fruit.

Determining the level of pesticides in agricultural products is essential for introducing these products, such as fruits or vegetables, into the processing market or for direct trade. Permissible levels of pesticides are defined by relevant national regulations as well as in Regulation (EC) No. 396/2005 of the European Parliament and of the Council of February 23rd 2005. Currently pesticide detection is routinely performed using laboratory methods, mainly gas chromatography, liquid chromatography and mass spectrometry. Such measurement is expensive, requires a special method of processing the sample to be measured (by means of microextraction of compounds), it is long-lasting (several days) and can only be performed in a specialized laboratory with very expensive equipment. These are certified methods which meet current standards, however the time to obtain the results and costs are very high and there is an economic need to reduce them.

Another measurement method includes one-time enzymatic tests which are still being developed and also require specific processing of the test material sample, however their disadvantage is the lack of appropriate sensitivity and selectivity.

Operating principle of the device according to the present invention allows measurements to be carried out on samples very quickly (the measurement itself takes only a few minutes) with high chemical specificity as well as measurement sensitivity. The development of this method is Surface-enhanced Raman spectroscopy (SERS) which uses metallic nanomaterials that are used to amplify the signal of a molecule in close contact with a given nanomaterial, which allows to further increase the sensitivity of the method.

A slightly different variant of the SERS method is to perform measurements at a given electric potential. Most often this is conducted by directly combining the SERS method with electrochemistry, through the usage of metallic nanomaterials which both have a surface reinforcement effect, as well as act as one of the electrodes in electrochemistry. The correlation of the results from both methods allows the detection of the type and concentration of the substance.

By means of the proposed mobile measuring device, which is the object of the present invention, it is possible to perform a measurement without specific processing of the sample at the place of production or storage of agricultural products. This allows, above all, to save a lot of time and detect pesticide content throughout the product's life, "from the field to the consumer".

From the description of patents US20180095062A1, WO2017049114A1, a portable device of the hand-held type is known, based on the SERS method for detecting analytes in aqueous samples, located in a microfluidic system directing the sample to a special measuring well, where the analyte is mixed with a nanoparticle solution, an additional analyte analog or optionally, another excipient. The analysis mainly consists in comparing the analyte with a known isotopologue and the nanoparticles used to enhance the signal are gold or silver in the size range 10 - 200 nm. Pesticides are given as an example of the application of the method. A significant difference is the requirement to use isotopologues of the measured substances. The concentration is measured by mixing the sample with a known substance and mixing it with the isotopologue of the given substance. It requires carrying out the analyte reaction and measuring the reaction product by the SERS method, as well as measuring the isotopologue of the substance added to the product by the SERS method and their comparison.

Another patent description US20180113075A1 depicts a method of detecting pesticides on the surface of biological material by the SERS method, where metallic nanoparticles with a size of 20-200 nm are layered, the Raman effect (scattering) is measured, the tested object is washed and the measurement is repeated. Moreover, the application describes a system in which the determination of the location of the pesticide on the surface of an object and in depth is performed in an analogous manner, using a stationary Raman microscope for imaging (mapping) the object. An important difference is the application of the nanoparticle solution to the surface of the fruit, their drying and subsequent measurement. The aim of the measurement is to determine the location (in the X, Y or Z axis) of the pesticide molecule on the surface or deep inside the skin of the fruit. Which is different from detecting the presence, concentration and processing of a sample of plant material.

The application no. CN103472051A discloses a pesticide measurement method consisting in extracting a sample from a fruit peel, mixing it with a (previously prepared) colloid of silver nanoparticles and NaCl, and applying the mixture thus obtained to a microscope slide, and conducting measurement after the sample has dried. The method of extracting the sample from the peel consists in mixing with metallic iron nanoparticles Fe3O4-C18 which capture organophosphorus pesticides and washing the solution with several solvents and removing nanoparticles. The method is significantly different, as it can only be used for organophosphorus pesticides and requires extraction with the usage of Fe3O4-C18 nanoparticles, where C18 extracts pesticides of this group.

The descriptions of inventions CN201110454582 and EP2889609A2 present a method of measuring pesticides by the conventional Raman spectroscopy method, without the usage of nanomaterials to induce the SERS effect. A significant difference is the lack of nanoparticles usage to enhance the Raman signal, i.e. the lack of the SERS method usage.

The description of US20050221510A1 discloses a method of detecting substances by means of metallic nanoparticles linked to a molecule containing bonds with sulfur with a thiol group. The molecule has groups connecting it to the nanoparticle surface as well as the analyte surface. A significant difference is the modification of the metallic surface of the nanoparticle by attaching a molecule to it, which in turn attaches to itself the analyte molecules thanks to the thiol groups.

Whereas the application CN104101591A describes the extraction of pesticides from oranges via C18 and other chemical compound, followed by the SERS method. The significant difference is the usage of C18 or other substances for pesticide extraction; it only applies to oranges.

In the application WO2019014887A1, the SERS method is used to measure a sample which has previously been extracted by microfiltration in a filter column and a micro-porous membrane in the presence of solvents, application of such a sample to the surface of a substrate, together with the application of additional solvents as well as heating the local sample with light for thermal evaporation of the solvents to concentrate the sample on the SERS substrate. A significant difference is the extraction required by microfiltration in the filtration column as well as thermal evaporation of the sample on the SERS substrate.

The subject of the invention is a device for determining the type and concentration of pesticides in agricultural products using the Raman spectroscopy method, and in particular a variant of this method, which is Surface-enhanced Raman spectroscopy (SERS). The device is mobile, it allows to perform measurements indoors, e.g. in a warehouse and in the field. The device is automatic and gives the result within less than a laboratory test (<1 hour). In order to perform the measurement / test, the device receives a sample of the agricultural product, chemicals and nanomaterials. The device operates in the following stages: (I) preparing the device for measurement, (II) the device pre-processes a sample of an agricultural product; (III) the device processes this sample into the form required for measurement, (IV) the device combines the processed sample with nanomaterial or several nanomaterials, (V) the device measures the Raman spectrum of the sample in direct contact with the nanomaterial one or more times, additionally before measuring the sample, the device can measure the reference background signal (nanomaterial without sample), (VI) the device cleans the track / measuring chamber (VII) the device processes the measurement data, (VIII) the device analyzes the measurement signal using artificial intelligence (machine learning) algorithms, (IX) the device presents the qualitative and quantitative measurement result of a pesticide in an agricultural product.

The database includes a database of information and measurement results of samples processed in a given way, where the correlation between the measurement result and the actual concentration of the substance sought is known. Based on artificial intelligence algorithms, it is possible to present the concentration measurement result.

The advantage of the invention is that the pesticide level (its concentration) in the agricultural product is automatically measured. In addition, the measurement can be performed at any place, e.g. in storage rooms or in the field (at the production site). The total operating time of the device, counted from inserting a sample of an agricultural product until obtaining a measurement result, is shorter than a typical laboratory measurement which lasts several days and is up to several hours, depending on the type of product, while the waiting time for the measurement result should not be longer than an hour. Carrying out the measurements in an automatic way causes lower requirements for the qualifications of the personnel. The mobility of the device allows for measurements outside the analytical laboratory and shortens the time from taking the sample to the measurement result. It is also associated with the economic effect in the form of savings in costs related to logistics, or an increase in the number of measurements performed at a given time.

The subject of the invention is a mobile device for the detection of pesticides in a sample that is an agricultural product by means of Surface-enhanced Raman spectroscopy (SERS) which includes:
feeder for raw material, container for processing the raw material to the required form, feeder for nanomaterials in liquid phase, feeder for nanomaterials in solid phase - substrates with nanomaterials, container for preparing the sample for measurement, platform for moving samples in containers or vessels for measurement, Raman spectrometer and measuring chamber.
Preferably, the measuring containers or vessels for the liquid nanomaterials of the mobile device are equipped with a measuring well, open or closed, made of aluminum or silicon, quartz, CaF2.
Preferably, the measurement containers or vessels for the solid nanomaterials of the mobile device are equipped with a substrate obtained in place.
The present invention relates to a method of detecting pesticides in a sample which is an agricultural product with a device as defined above, wherein:
- the raw material is fed to the feeder;
- the containers automatically pre-process the agricultural product sample to the required form by centrifuging and decanting the supernatant solution and / or filtering the solution as well as mixing with a solvent in a manner which does not degrade pesticides;
- the processed and prepared for measurement sample in the container is combined with the nanomaterial in the solid or liquid phase in the ratio 1: 1 v / v - 1:10 v / v;
- the material is fed into the chamber via platform moving the samples in measuring containers or vessels;
- in the measuring chamber, the sample is illuminated with at least one coherent source of electromagnetic radiation, in particular a laser, and the emitted radiation is registered with a spectrometer, in particular a Raman spectrometer, which is the measurement spectrum of the sample.

Preferably, the method of detecting pesticides in case the nanomaterial is liquid, is to be fed through the feeder; it consists in a colloid of nanoparticles, mainly made of precious metals, such as gold, silver or mixtures thereof, ensuring the surface amplification effect takes place, where the surface plasmon resonance curve of the nanomaterial (SPR) reaches at least 90% of its maximum at the laser wavelength.
Preferably, the method of pesticide detection in case the nanomaterial is solid, is to be fed through the feeder; it consists in the form of a plate, preferably made of glass or silicon oxide, quartz, calcium fluoride, aluminum, steel, paper, cellulose, fabric (cotton), carbon or a mixture thereof, permanently connected with a metal (gold, silver, copper, aluminum, platinum) in the form of a surface coating with a thickness of 1 - 250 nm, where the surface plasmon resonance curve of the nanomaterial (SPR) reaches at least 90% of its maximum at the laser wavelength, or in the form of nanoparticles deposited thereon, as in claim.
Preferably, a method of pesticide detection, where combining the sample with the nanomaterial consists in mixing it in appropriate proportions with a nanoparticle solution, with the nanoparticle solution obtained as a result of a previous centrifugation procedure, with a speed in the range of 500 - 4000 rcf, preferably 2000 rcf of the nanomaterial solution, where the sediment is a solution of nanoparticles.
Preferably, a method of detecting pesticides, where combining the sample with a solid nanomaterial consists in spraying the sample on the surface of the nanomaterial, after which it can be heated until it is dried / evaporated or / and adsorbed / soaked.
Preferably, a pesticide detection method, where the test result includes at least one type of pesticide detected and their quantity or, in case of their absence, information about the absence of pesticides.
Preferably, a method of pesticide detection, where on the basis of the recorded measurement spectrum, it determines the result of the measurement which is sent to the measurement device by means of artificial intelligence (machine learning) algorithms.
Preferably, a method of pesticide detection, where the device can be powered by batteries, accumulators, aggregates, solar, or combinations thereof, allowing for autonomous work at the measurement site.

The terms used above as well as in the description and patent claims have the following meanings:
**Agricultural product** - means fruits or vegetables, both individually as well as in larger quantities.
**Analyte** - means the tested sample.
**Mobile device** - means a portable device which can be moved from one place to another.
**Pesticide** - means measures to combat harmful organisms, used in horticulture and agriculture. They are used in particular against harmful and / or undesirable organisms, such as insects, fungi, herbicides.
**Raw material** - means a product tested in the form of an agricultural product.

### Description of the figures:

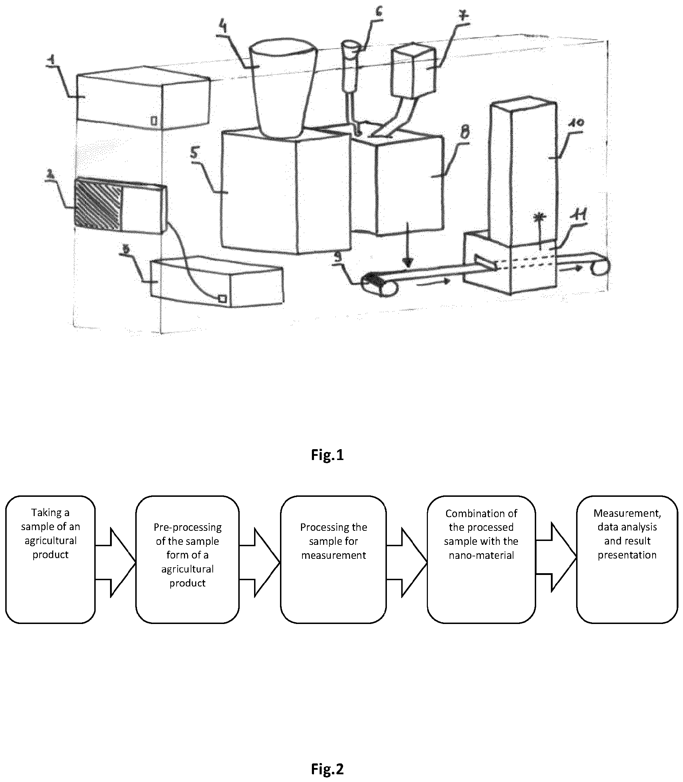

**Fig. 1** **-** presents a diagram of the measuring system, which includes: (1) power supply, (2) user interface, (3) controller, (4) feeder for raw material, (5) container where the raw material is processed, (6) feeder for liquid nanomaterial, (7) feeder for substrates with nanomaterials, (8) container where samples preparation for measurement takes place, (9) platform for moving samples in containers or vessels for measurement, (10) Raman spectrometer, (11) measuring chamber. The arrows present the direction of the sample and nanomaterial passage through the measuring chamber coupled with the Raman spectrometer, where the Raman spectrum is measured, and then the sample is disposed.
**Fig. 2** - presents the general operating principle of the device.

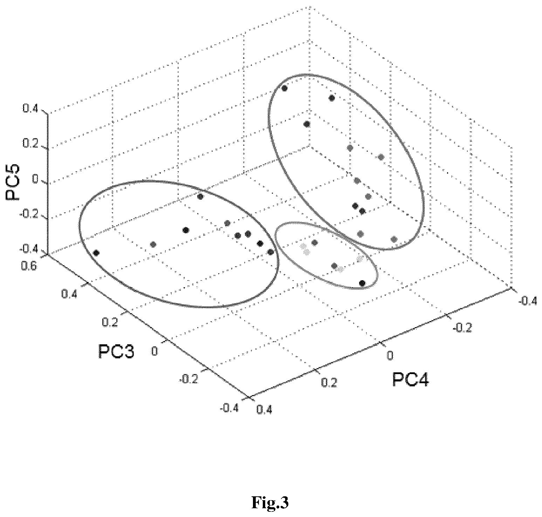

**Fig. 3** - presents an example of the quantive result of device operation determining pesticide concentration (thiophanate-methyl). Groups of samples with various concentrations are marked with colours. High concentration is marked in red, intermediate in green and low in blue (1000 ppm, 1 ppm, 1 ppb, respectively).

The invention is illustrated by the following non-limiting examples:

### Example 1

Mobile device consists of the following elements: power supply (1); wireless communication and user interface (2); controller (3); feeding and pre-processing raw material in the form of an agricultural product (4); a feeder for liquid or solid nanomaterial (6); processing the sample to be measured (8); Raman spectrometer (10) measuring the sample in a measurement chamber using the nanomaterial to amplify the sample signal; a platform for moving the samples (9) onto containers or vessels for measuring and storing used materials.

In particular, the device shown in (Fig. 1) consists of: a power supply (1) for electrical components; a user interface (2) allowing communication with the user, i.e. entering data and setting system operating parameters as well as displaying information to the user; an electronic controller (3) which controls all components of the system, data storage, data processing, data analysis; a feeder for raw material (4) where the agricultural product is introduced; converting the raw material onto the required form (5); a nanomaterial feeder (6) in liquid form, e.g. a solution of nanoparticles; a feeder for substrates (7) with nanomaterials, preparing the sample for measurement (8); a sample moving platform (9), equipped with containers or vessels for measurement, which in the case of using liquid nanomaterials are equipped with a measuring well, open or closed, made of aluminum, silicon, quartz, CaF₂, etc., while in the case of nanomaterials a solid container or vessel for measurements keeps the substrate in place; Raman spectrometer (10); measuring chamber (11).

### Example 2

The method of operation of the device according to (Fig. 2) consists in processing the loaded sample of agricultural product into the form required by the standards for ensuring a unified and representative sample, then processing it into a form which meets the conditions for measuring the Raman spectrum, combining it with the nanomaterial, measuring the Raman spectrum, processing and analysis of measurement data with the usage of artificial intelligence (machine learning) algorithms, and presentation of the pesticide concentration result in an agricultural product.

The detailed operation of the device consists in:
(I) preparing the measurement device by: placing in it the appropriate chemical substances necessary for the processing of the samples; chemical solvents and deionized water; placing liquid nanomaterials in the form of a colloid of metallic nanoparticles consisting of silver, gold or their mixture or consisting of layers or metallic nanoparticles deposited on a solid substrate, e.g. silicon, metal, paper, cellulose, polymers; placing the sample of the agricultural product in the feeder (4); power supply connection (1).
(II) the device performs initial processing of the agricultural product into the required form, defined appropriately for each type and species of agricultural product, where the common element is cleaning and homogenization of the sample in accordance with the standards - a container (5);
(III) the device processes the agricultural product into a sample which is the object of the Raman spectrum measurement - a container (8).
(IV) combining the sample with the nanomaterial in a manner appropriate for the given solid / liquid form of the nanomaterial.
(V) the device in the measuring chamber (11) measures sample of the the Raman (surface-enhanced) spectrum combined with the nanomaterial.
(VI) the device cleans the platform moving the samples (9) / measuring chamber (11), discards the used nanomaterial and the sample;
(VII) the device processes measurement data, particularly by comparison with reference data, uses algorithms which change the form of the Raman spectrum by normalizing, reducing noise, removing interference, removing background, etc.
(VIII) the device uses artificial intelligence (machine learning) algorithms, preferably neural networks, to recognize the amount and type of pesticide.
(IX) the device presents the measurement result to the user

### Example 3

The raw material (sample of agricultural product) is fed to the mobile device - feeder (4) by the user, then, according to the type of the sample, it is pre-processed (container 5). Processing may consist of homogenizing the sample and / or centrifuging the sample and / or filtering the sample, or subjecting it to other processes.
a) The raw material (an apple) is pre-processed (container 5) by cleaning the batch with water (washing), cutting the skin or leaving it, and homogenizing the sample and filtering the mixture to extract a sample of the liquid suspension of the flesh, juice, etc.
b) The raw material (carrots) is pre-processed (container 5) by cleaning the batch with water (washing), homogenizing the sample, centrifuging and extracting the liquid sample in the form of juice.

The processed sample is then subjected to another treatment (container 8) in order to prepare it for measurement and to connect it with the nanomaterial. Sample preparation may in particular consist of centrifugation (in the range 100-5000 rcf, preferably 2000 rcf); decanting; mixing with a solvent of a type and concentration depending on the agricultural product and the type of pesticide / pesticides. Nanomaterial the SPR resonance curve is equal to the laser wavelength, ensuring the surface effect of signal amplification in this method.
a) The processed sample (an apple) is mixed with a solvent, preferably acetonitrile, preferably in a volume ratio of 1: 1 v / v or 1: 2 or other. The sample is centrifuged, preferably at 4000 rcf, followed by decantation of the centrifuged solution to remove the flesh. Then the sample is combined with the nanomaterial. For a liquid nanomaterial, the sample is mixed, preferably in a 1: 1 v / v or 1: 4 v / v volume ratio and fed into the measuring cuvette for measurement.
   In case the nanomaterial is a solid, the liquid sample is sprayed on the nanomaterial (substrate) and, after waiting preferably 30 minutes for it to dry, the substrate with the sample is transferred for measurement using the sample transfer platform.
b) The processed sample (carrot) is mixed with a solvent, preferably methanol, preferably in a 1: 1 v / v or 1: 2 or other volume ratio. The sample is centrifuged, preferably at 2000 rcf, and then the centrifuged solution is decanted to remove the flesh. For a liquid nanomaterial, the sample is mixed, preferably in a 1: 1 v / v or 1: 4 v / v volume ratio, and fed into the measuring container or vessel for measurement.

In case the nanomaterial is a solid, the liquid sample is sprayed on the nanomaterial (substrate) and, after waiting preferably 15 minutes for it to dry, the substrate with the sample is transferred for measurement by the sample transfer platform.

The liquid nanomaterial can be a colloid of nanoparticles, made mainly of precious metals, such as gold, silver, and / or silica, or other materials and mixtures thereof, in any proportions, shapes and sizes ensuring the surface signal amplification effect in this method.

Combining with a liquid nanomaterial consists in mixing a liquid sample with a liquid solution containing the nanomaterial and placing it in a measuring cuvette.

It is recommended for the nanomaterial to be activated (produced and prepared for measurement) just before the test is performed to ensure optimal conditions for the most effective signal amplification effect which affects the sensitivity and measurement accuracy. In case liquid nanomaterial is used, the nanomaterial is previously (in the device) centrifuged in the range of 500-4000 rcf, preferably 2000 rcf, liquid decanting and using sediment (nanoparticles) to mix with the sample. After mixing with the sample, the material is placed in the measuring container or vessel on the sample moving platform.

The solid nanomaterial may be plate made of glass, silicon, quartz, metallic, paper, fabric (cotton), semiconductor, carbon wafer, any surface bonded in any way to a precious metal as previously mentioned.

Combining with a solid nanomaterial consists in depositing a liquid sample on a solid nanomaterial which is placed in a measuring cuvette. In case of a solid nanomaterial usage, the sample is sprayed on the surface of the nanomaterial, after which it can be heated to accelerate the drying process (evaporation / adsorption / infiltration).

The container or vessel for measurement is transported by the sample moving platform from the sample application point to the measuring chamber and after the measurement is carried out, to the waste container (external container).

In the measuring chamber, the sample is illuminated with laser radiation with a narrow spectral range, less than 0.5 nm, preferably 0.05 nm, with a continuous power in the range of 1 - 500 mW, and wavelength in the visible and near infrared range, preferably 500 - 900 nm, and measurement of the radiation emitted using a Raman spectrometer. In case of contact of the sample with nanomaterial (liquid or solid), Surface-enhanced Raman spectroscopy (SERS) spectrum is recorded.

Measurement of a sample with a solid nanomaterial consists in illuminating the sample with laser radiation and recording Surface-enhanced Raman spectroscopy spectrum (SERS spectrum) with a Raman spectrometer. The measurement is repeated many times at different points of the nanomaterial surface with the sample. The change in measurement location results from the sample shift in relation to the laser beam.

Measurement of a sample with the liquid nanomaterial consists in illuminating the sample with laser radiation and recording Surface-enhanced Raman spectroscopy spectrum (SERS spectrum) with a Raman spectrometer. The measurement of a given sample may be performed several times.

The device processes measurement data (spectrum and other collected data) and sends them to a central database via wireless connection to the Internet. A central database of spectra, using artificial intelligence / machine learning algorithms, determines the measurement result which is sent to the device. The device presents the result to the user, including the type of pesticide as well as information about its quantity (e.g. Below the level / above the level).

Measurement data is analyzed by appropriate artificial intelligence algorithms, based on the developed calibration models built on the basis of the Raman spectra database. The final result is presented in a qualitative form as a type of pesticide as well as in quantitative form as exceeding or not exceeding the permitted level of concentration in a given agricultural product.

### Literature

[1] Regulation (EC) No. 396/2005 of the European Parliament and of the Council of February 23rd 2005 on maximum residue levels of pesticides in or on food and feed of plant and animal origin and amending Council Directive 91/414/EEC (Text with EEA relevance)
[2] Vidal, JL Martinez, et al. "Determination of pesticide transformation products: a review of extraction and detection methods." Journal of Chromatography A 1216.40 (2009): 6767-6788.
[3] Hernandez, F., J. V. Sancho, and O. J. Pozo. "Critical review of the application of liquid chromatography/mass spectrometry to the determination of pesticide residues in biological samples." Analytical and bioanalytical chemistry 382.4 (2005): 934-946.
[4] Aulakh, J. S., et al. "A Review on solid phase micro extraction-high performance liquid chromatography (SPME-HPLC) analysis of pesticides." Critical Reviews in Analytical Chemistry 35.1 (2005): 71-85.
[5] Bruzzoniti, Maria Concetta, et al. "QuEChERS sample preparation for the determination of pesticides and other organic residues in environmental matrices: a critical review." Analytical and Bioanalytical Chemistry 406.17 (2014): 4089-4116.
[6] Jiang, Xuesong, et al. "Immunosensors for detection of pesticide residues." Biosensors and Bioelectronics 23.11 (2008): 1577-1587.
[7] Van Dyk, J. Susan, and Brett Pletschke. "Review on the use of enzymes for the detection of organochlorine, organophosphate and carbamate pesticides in the environment." chemosphere 82.3 (2011): 291-307.
[8] Songa, E. A. & Okonkwo, J. O. Talanta Recent approaches to improving selectivity and sensitivity of 537 enzyme-based biosensors for organophosphorus pesticides : A review. Talanta 155, 289-304 (2016).
[9] Robinson, A. M., S. G. Harroun, J. Bergman, and C. L. Brosseau. "Portable electrochemical surface-enhanced Raman spectroscopy system for routine spectroelectrochemical analysis." Analytical chemistry 84, no. 3 (2012): 1760-1764.
[10] Fanjul, P., Ibáñez, D., Junquera-Perez, A., Gonzalez-Garcia, M. B., & Hernandez-Santos, D. Versatility of Time-Resolved Raman Spectroelectrochemistry: From the Resolution of Mixture of Vitamins to the Detection Pesticides. In Meeting Abstracts, The Electrochemical Society, (2019); 38:1917-1917.
[11] Xu ML, Gao Y, Han XX, Zhao B. Detection of Pesticide Residues in Food Using Surface-Enhanced Raman Spectroscopy: A Review.J Agric Food Chem. (2017);65(32):6719-6726.
[12] Pang, Shintaro, Tianxi Yang, and Lili He. "Review of surface enhanced Raman spectroscopic (SERS) detection of synthetic chemical pesticides." TrAC Trends in Analytical Chemistry 85 (2016): 73-82.

## Claims

1. Mobile device for the detection of pesticides in a sample constituting an agricultural product by Surface-enhanced Raman spectroscopy (SERS), **characterised in that** it comprises:
feeder for raw material (4), container for processing the raw material to the required form (5), feeder for nanomaterials in the liquid phase (6), feeder for nanomaterials in solid phase - substrates (7) with nanomaterials, container for preparing the sample for measurement (8), the platform moving the samples in measuring containers or vessels (9), Raman spectrometer (10) and the measuring chamber (11).

2. Mobile device according to claim 1, **characterised in that** the measuring containers or vessels (9) for liquid nanomaterials are equipped with a measuring well, open or closed, made of aluminum or silicon, quartz, CaF2.

3. Mobile device according to claim 1, **characterised in that** the measuring containers or vessels (9) for solid nanomaterials are equipped with a substrate obtained in place.

4. Method of detecting pesticides in a sample of an agricultural product with the device as defined in claim 1, wherein:
- the raw material is fed to the feeder (4);
- in the container (5) and (8), the agricultural product sample is automatically pre-processed to the required form by centrifugation and decantation of the supernatant solution and / or solution filtration, and mixing with a solvent in a manner which does not degrade the pesticides;
- the processed and prepared for measurement sample in the container (8) is combined with the nanomaterial in a solid or liquid phase in the ratio 1: 1 v / v - 1:10 v / v;
- the material is fed into the chamber (11) via the platform moving the samples in the measuring containers or vessels (9);
- in the measuring chamber (11), the sample is illuminated with at least one coherent source of electromagnetic radiation, in particular a laser, and the emitted radiation is registered with a spectrometer, in particular a Raman spectrometer, which is the measurement spectrum of the sample.

5. Method for detecting pesticides according to claim 4, **characterised in that** if the nanomaterial is liquid, it is fed through the feeder (6), it is a colloid of nanoparticles, mainly made of precious metals, such as gold, silver or mixtures thereof, ensuring the effect of surface amplification of the signal, wherein the plasmon SPR resonance curve of the nanomaterial reaches at least 90% of its maximum at the laser wavelength.

6. Method of pesticide detection according to claim 4, **characterised in that** if the nanomaterial is solid, it is fed through the feeder (7), it is in the form of a plate, preferably made of glass or silicon oxide, quartz, calcium fluoride, aluminum, steel, paper, cellulose, fabric (cotton), carbon or mixture thereof, permanently bonded to metal (gold, silver, copper, aluminum, platinum) in the form of a surface coating with a thickness of 1 - 250 nm, where the plasmon SPR resonance curve of the nanomaterial reaches at least 90% of its maximum at the laser wavelength, or in the form of nanoparticles deposited thereon, as in claim 6.

7. Method of detecting pesticides according to claim 5, **characterised in that** combining of the sample with the nanomaterial consists in mixing it in appropriate proportions with a nanoparticle solution with the nanoparticle solution obtained by a previous centrifugation procedure, with a speed in the range of 500-4000 rcf, preferably 2000 rcf, nanomaterial solution, where the sediment is a solution of nanoparticles.

8. Method for detecting pesticides according to claim 6, **characterized in that** combining the sample with a solid nanomaterial consists in spraying the sample on the surface of the nanomaterial, after which it can be heated until it is dried / evaporated or / and adsorbed / soaked.

9. Method for detecting pesticides according to claims 4-8, **characterised in that** the test result contains at least one type of pesticide detected and their quantity or, in case of their absence, information about the absence of pesticides.

10. Method for detecting pesticides according to claims 4-9, **characterised in that** on the basis of the registered measurement spectrum, it determines the measurement result by means of artificial intelligence (machine learning) algorithms, which is sent to the measurement device.

11. Method of pesticide detection according to claims 4-10, **characterised in that** the device may be powered by batteries, accumulators, aggregates, solar or combinations thereof, allowing for autonomous work at the measurement site.
